# EUROPÄISCHE PATENTSCHRIFT

(11) **EP 1 654 921 B1**
(45) Veröffentlichungstag und Bekanntmachung des Hinweises auf die Patenterteilung: **12.12.2007**
(21) Anmeldenummer: 05023596.9
(22) Anmeldetag: 28.10.2005
(51) Int. Cl.: A01D 34/64

(54) **Selbstfahrendes Mähgerät**
Self-propelled mower
Faucheuse automotrice

(30) Priorität: 03.11.2004 DE 102004053002
(43) Veröffentlichungstag der Anmeldung: 10.05.2006
(73) Patentinhaber: Amazonen-Werke H. Dreyer GmbH & Co. KG, 49205 Hasbergen (DE)
(72) Erfinder: Dreyer, Heinz, Dr. Dr.h.c. Dipl.-Ing. Univ, 49205 Hasbergen (DE); Krabbe, Ulrich, 49205 Hasbergen (DE)

(56) Entgegenhaltungen:
- DE-A1- 10 210 401
- US-A- 4 663 923
- US-A- 4 829 754
- US-A- 4 934 130
- US-A- 5 079 907
- US-A- 5 475 971

## Beschreibung

Die Erfindung betrifft ein selbstfahrendes Mähgerät gemäß des Oberbegriffes des Patentanspruches 1.

Ein derartiges Mähgerät ist beispielsweise durch die US 50 79 907 A1 bekannt.

Dieses Mähgerät weist ein vor dem Fahrwerk angeordnetes Sichelmähblätter aufweisendes Mähwerk auf, welches höhenbeweglich am Rahmen angeordnet ist. Während des Mähens, insbesondere von feuchtem und nassen Mähgut, setzen sich Mähgut oder dessen Reste und Bodenteile außerhalb der Umlaufbahn der Sichelmähblätter an dem Mähgehäuse fest. Im Laufe der Mähzeit baut sich immer mehr festsetzende Masse auf, so dass zu einem früheren oder späteren Zeitpunkt die Mähmesser an der sich am Mähgehäuse festsetzenden Masse anschlagen und es nach einiger Zeit es zum blockieren der umlaufenden Sichelmähblätter kommt oder die Sichelmähblätter die Masse anschlagen, die sich dann in großen Klumpen von dem Mähgehäuse löst. Beim Einsatz auf weichen und feuchten Flächen sackt das sich auf schmalen Laufrollen abstützenden Mähwerk aufgrund des Gewichtes der sich am Mähgehäuse festsetzenden Masse nach unten ab, so dass das zu mähende Gut zu niedrig geschnitten wird. Zum Zwecke der Reinigung, der Inspektion und des Services ist das Mähwerk mittels einer Hebevorrichtung zum Ankippen des Mähwerkes anhebbar, so dass das Mähwerk von seiner Unterseite zum Zwecke der Reinigung zugänglich ist. Problematisch ist jedoch die Verletzungsgefahr bei der Reinigung von unten, wenn der Antrieb nicht abgeschaltet ist.

Der Erfindung liegt die Aufgabe zugrunde, das Mähwerk zum Entfernen von sich in dem Mähgehäuse ansetzenden Mähgut und Mähgutresten, wenn das Mähgut aus dem von der Unterseite in entfernt wird, keine Unfallgefahr besteht, zu verbessern.

Diese Aufgabe wird erfindungsgemäß durch die kennzeichnenden Merkmale des Patentanspruches 1 gelöst. Mittels der erfindungsgemäßen Vorrichtung kann das Mähwerk in einfacher und bequemer Weise in eine angekippte Position gebracht werden. In dieser angekippten Position kann dann von der Unterseite mit Hilfsmitteln, wie Stangen etc. das sich an dem Mähgehäuse angesetzte Mähgut, Mähreste, Bodenteile etc. entfernt werden.

Um sicher zu stellen, dass das Mähwerk abgeschaltet ist, wenn es in die angekippte Position gebracht wird, um Verletzungen durch das Mähwerk sicher zu vermeiden, ist vorgesehen, dass in dem Antrieb des Mähwerkes eine Abschalteinrichtung sich befindet, dass die Abschalteinrichtung den Antrieb des Mähwerkes beim Bringen in die angekippte Position abschaltet. Somit wird der Antrieb des Mähwerkes automatisch abgeschaltet, wenn das Mähwerk in Reinigungsposition gebracht wird. Hierdurch wird ein hoher Sicherheitsstandard erreicht.

Mittels dieser Hebevorrichtung kann dann das Mähwerk in einfacher leichter und bequemer Weise in die angekippte Position gebracht werden.

Hierbei kann die Hebevorrichtung beispielsweise als Seilwinde ausgebildet sein. Mittels der Seilwinde lässt sich dann das Mähwerk leicht anheben und in die angekippte Position bringen. Aus bedienungs- und sicherheitstechnischen Gründen ist es vorteilhaft, wenn die Seilwinde selbsthemmend ausgebildet ist.

Auch ist es möglich, dass die Hebevorrichtung als motorisches Stellelement, wie beispielsweise Hydraulikzylinder, elektrischer Hubspindelmotor ausgebildet ist. In diesem Falle wird über das motorische Stellelement der Hebevorrichtung das Mähwerk einfach angekippt bzw. wieder abgesenkt.

Damit die Unterseite des Mähwerkes ausreichend zugänglich ist, ist vorgesehen, dass der senkrechte Abstand der Unterseite der Vorderseite des Mähwerkes zu der Unterseite der Rückseite des Mähwerks in der angekippten Position mindestens 1/3 der sich in Fahrtrichtung erstreckenden Länge des Mähwerkes beträgt.

Um Das Mähwerk ausreichend hoch ankippen zu können, ist vorgesehen, dass zwischen der Oberseite des Mähwerkes und dem Rahmen ein ausreichender Freiraum zum Ankippen des Mähwerkes sich befindet.

Weitere Einzelheiten der Erfindung sind der Beispielsbeschreibung und den Zeichnungen zu entnehmen. Hierbei zeigen:
- Fig. 1: das Mähgerät mit dem Mähwerk in Seitenansicht, in Prinzipdarstellung und in Arbeitsstellung und
- Fig. 2: das Mähgerät mit dem Mähwerk in der angekippten Position zum reinigen des Mähgehäuses von der Unterseite in Seitenansicht und in Prinzipdarstellung.

Das Mähgerät weist ein Fahrwerk 1 mit den beiden angetriebenen Vorderrädern 2 und den hinteren Pendellaufrädern 3 auf. Die Lenkung erfolgt über die angetriebenen Vorderräder 2. An dem Rahmen 4 der Maschine ist auf der Rückseite der Sammelbehälter 5 angeordnet. Auf der Vorderseite des Gerätes ist über das untere Lenkerpaar 6 das Sichelmähwerk 7 in Höhenrichtung bewegbar angeordnet. Das Sichelmähwerk 7 weist die im Mähgehäuse 8 gelagerten und um aufrechte Achsen 9 rotierend angetriebenen Sichelmähblätter 10 auf. Die Sichelmähblätter 10 sind in dem Mähgehäuse 8 gelagert. Das Mähgehäuse 8 umgibt die Sichelmähblätter 10. Hinter den Sichelmähblättern 10 ist die Querförderschnecke 11 in dem Fördertrog 12 angeordnet und in den Seitenwandungen des Fördertroggehäuses 13 gelagert. Das von den Sichelmähblättern 10 gemähte Gut wird in den Fördertrog 12 der Querförderschnecke 11 geworfen und von der Querförderschnecke 11 zu der Längsförderschnecke 14 gefördert. Die Querförderschnecke 11 fördert das Gut von beiden Seiten der Längsförderschnecke 14 zu. Diese Längsförderschnecke 14 ist in dem Förderrohr 15 angeordnet, das Förderrohr 15 bildet den weiteren Lenker 16 für das Sichelmähwerk 7 zur Anlenkung und Führung des Mähwerkes 7 gegenüber dem Rahmen 4. Über die Längsförderschnecke 14 wird das Gut in den Sammelbehälter 5 gefördert und dort verdichtet.

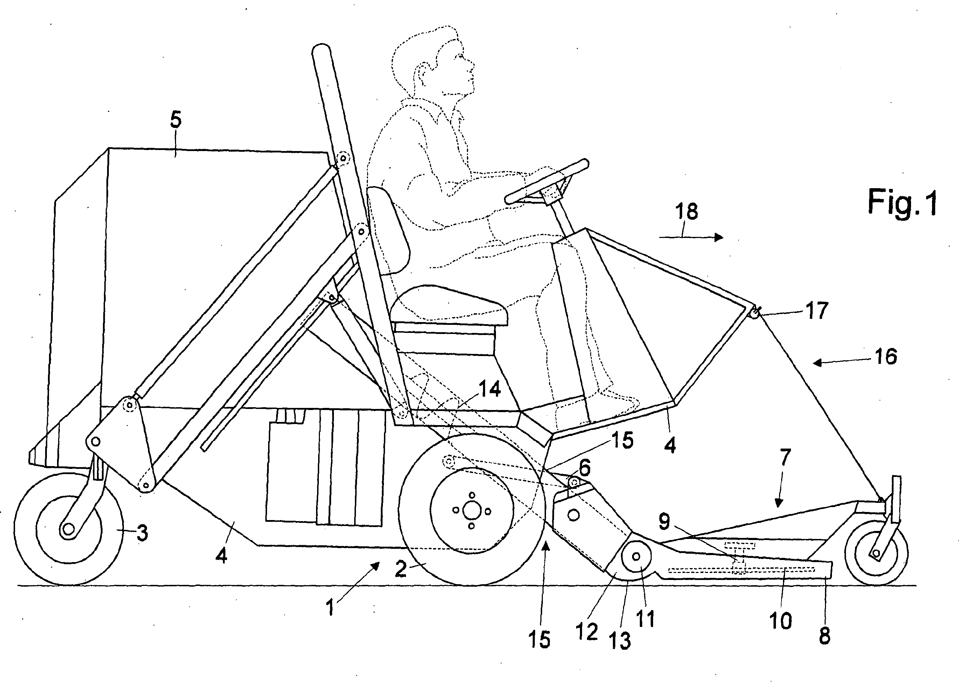

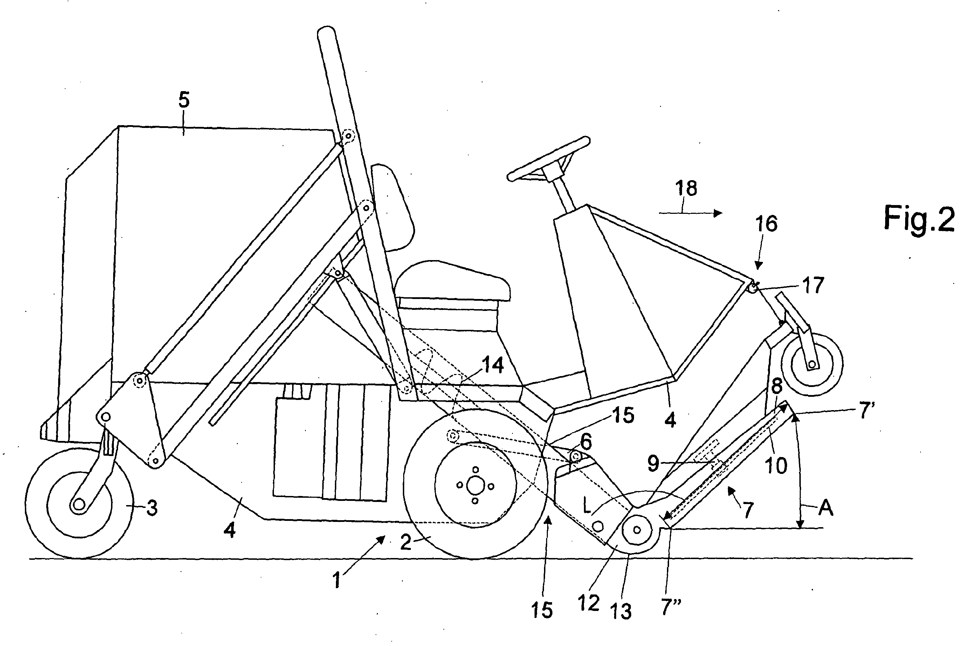

Zwischen dem Gehäuse 8 des Sichelmähwerks 7 und dem Rahmen 4 des selbstfahrenden Mähwerks ist eine Vorrichtung 16 zum ankippen des Sichelmähwerkes aus dem in Fig. 1 dargestellten Mähposition in die Position 2 dargestellte angekippte Reinigungsposition zu bringen. Im Ausführungsbeispiel ist die Vorrichtung 16 zum Ankippen des Mähwerkes als selbsthemmende Seilwinde 17 ausgebildet. Mittels der Seilwinde 17 kann in leichter und bequemer Weise das Mähwerk 7 aus den in Fig. 1 dargestellten Mähposition in die in Fig. 2 dargestellte angekippte Reinigungsposition gebracht und wieder aus den in Fig. 2 dargestellten Reinigungsposition in die in Fig. 1 dargestellte Mähposition abgesenkt werden. In der angekippten Position, in welcher der senkrechte Abstand A der Unterseite der Vorderseite 7' des Mähwerkes 7 zu der Unterseite der Rückseite 7" des Mähwerkes 7 der angekippten Position beträgt mindestens ein Drittel der sich in Fahrtrichtung 18 erstreckenden Länge L des Mähwerkes 7. Aufgrund dieser angekippten Stellung des Mähwerkes 7, wie in Fig. 2 dargestellt ist, lässt sich in einfacher Weise mit einem Hilfsmittel wie z.B. eine Stange das sich am Mähgehäuse 8 festsetzende Mähgut, Mähreste, Bodenteile etc. leicht entfernen, damit die Sichelmähblätter 10 frei drehen können.

In nicht dargestellter Weise ist in dem Antrieb des Mähwerkes 7 eine Abschalteinrichtung angeordnet. Diese Abschalteinrichtung ist derart ausgelegt dass die Abschalteinrichtung den Antrieb des Mähwerkes 7 zu Beginn des Bringens in die angekippte Position abschaltet. Das Mähwerk 7 wird also stillgesetzt, so dass die Sicheln des Mähwerkes 7 keine Verletzungsgefahr bedeuten. Auch kann die Abschalteinrichtung derart ausgelegt sein, dass sie mit der Hebevorrichtung 16 derart gekoppelt ist, dass beim Betätigen der Hebevorrichtung 16 zunächst die Abschalteinrichtung in dem Antrieb des Mähwerkes das Mähwerk 7 stillgesetzt wird und dass erst nach dem Stillsetzen und dem Abschalten des Antriebes die Hebevorrichtung 16 das Mähwerk 7 anhebt bzw. ankippt. Zusätzlich zu dem Ankippen des Mähwerkes 7 ist es sinnvoll, wenn sich die Schwenkachse zum Ankippen des Mähwerkes 7 nicht an dem äußeren hinteren Ende des Mähgehäuses 8, sondern sich im mittleren Bereich des Mähwerkes befindet, dass das Mähwerk zunächst angehoben und anschließend angekippt wird. Zwischen der Oberseite des Mähwerkes 7 und dem Rahmen 4 ist ein ausreichender Freiraum zum Ankippen des Mähwerkes 7 vorhanden, wie die Fig. 1 und 2 zeigen. In der angekippten Position ist das Mähwerk 7 gut von der Unterseite zugänglich. Somit ist ein bequemes Reinigen des Mähwerkes möglich. Weiterhin kann bequem der Zustand der Sicheln und der Lagerung des Sichelmähwerkes festgestellt werden. Weiterhin ist es möglich, in der angekippten Position die Sicheln des Sichelmähwerkes nachzuschärfen.

Auch ist es möglich, die Hebevorrichtung als motorisches Stellelement, wie beispielsweise Hydraulikzylinder, elektrischer Hubspindelmotor auszubilden.

## Patentansprüche

1. Selbstfahrendes Mähgerät mit einem an einem Rahmen angeordneten Fahrwerk, wobei vor dem Fahrwerk an dem Rahmen mittels einer Lenkeranordnung ein mehrere rotierend angetriebene und in einem Mähgehäuse angeordnete Sichelmähblätter aufweisendes Mähwerk höhenbeweglich angeordnet ist, wobei das Mähwerk um eine quer zur Fahrtrichtung verlaufende Schwenkachse gegenüber dem Rahmen derart in eine angekippte Position hochschwenkbar ist, dass die Vorderseite des Mähwerks einen größeren Abstand zur Bodenoberfläche als die Rückseite des Mähwerks aufweist, wobei das Mähwerk (7) in der angekippten Position mittels einer zwischen dem Mähwerk (7) und dem Rahmen (4) angeordneten Vorrichtung (16, 17) festsetzbar ist, wobei die Vorrichtung (16, 17) zum Ankippen des Mähwerkes (7) als Hebevorrichtung ausgebildet ist und das Mähwerk (7) derart anhhebbar ist, dass der senkrechte Abstand A der Unterseite der Vorderseite (7') des Mähwerks (7) zu der Unterseite der Rückseite (7'') des Mähwerks (7) in der angekippten Position zumindest 1/3 der sich in Fahrtrichtung (18) erstreckenden Länge L des Mähwerks (7) beträgt, und zwar derart, dass das Mähwerk (7) von seiner Unterseite zum Zwecke der Reinigung zugänglich ist, **dadurch gekennzeichnet, dass** in dem Antrieb des Mähwerkes (7) eine Abschalteinrichtung sich befindet, dass die Abschalteinrichtung den Antrieb des Mähwerkes (7) beim Bringen in die angekippte Position abschaltet.

2. Mähgerät nach Anspruch 2, **dadurch gekennzeichnet, dass** die Hebevorrichtung als Seilwinde (17) ausgebildet ist.

3. Mähgerät nach Anspruch 2, **dadurch gekennzeichnet, dass** die Seilwinde (17) selbsthemmend ausgebildet ist.

4. Mähgerät nach Anspruch 1, **dadurch gekennzeichnet, dass** die Hebevorrichtung als motorisches Stellelement, wie beispielsweise Hydraulikzylinder, elektrischer Hubspindelmotor ausgebildet ist.

5. Mähgerät nach einem oder mehreren der vorstehenden Ansprüche, **dadurch gekennzeichnet, dass** zwischen der Oberseite des Mähwerkes (7) und dem Rahmen (4) ein ausreichender Freiraum zum Ankippen des Mähwerkes (7) sich befindet.

## Claims

1. Self-propelled mowing device with a framework disposed on a frame, wherein a mowing unit is disposed in front of the framework on the frame by means of a guiding arrangement so as to be vertically adjustable, the said mowing unit including a plurality of rotary mowing blades that are disposed in a mower housing and are rotationally driven, wherein the mowing unit is pivotable upwards about a pivotal axis, which extends transversely relative to the direction of travel, into a tilted position relative to the frame in such a manner that the front side of the mowing unit is at a greater distance from the surface of the ground than the rear side of the mowing unit, wherein the mowing unit (7) is securable in the tilted position by means of an apparatus (16, 17) that is disposed between the mowing unit (7) and the frame (4), wherein the apparatus (16, 17) for tilting the mowing unit (7) is in the form of a lifting apparatus and the mowing unit (7) can be lifted in such a manner that the vertical distance A between the underside of the front side (7') of the mowing unit (7) and the underside of the rear side (7") of the mowing unit (7) in the tilted position is at least 1/3 of the length L of the mowing unit (7) that extends in the direction of travel, such that the mowing unit (7) is accessible from its underside for the purposes of cleaning, **characterised in that** a cut off device is located in the drive of the mowing unit (7), **in that** the cut off device switches off the drive of the mowing unit (7) when it is moved into the tilted position.

2. Mowing device according to claim 2 (1), **characterised in that** the lifting apparatus is in the form of a cable winch (17).

3. Mowing device according to claim 2, **characterised in that** the cable winch (17) is self-locking.

4. Mowing device according to claim 1, **characterised in that** the lifting apparatus is in the form of a motorised adjusting element, such as, for example, a hydraulic cylinder or an electric lifting spindle motor.

5. Mowing device according to one or more of the preceding claims, **characterised in that** between the top of the mowing unit (7) and the frame (4) there is sufficient space to tilt the mowing unit (7).

## Revendications

1. Tondeuse automotrice comportant un châssis installé sur un cadre, sur l'avant du châssis, le cadre est équipé d'un dispositif de coupe mobile en hauteur, ayant plusieurs lames de coupe en forme de faucille, installées dans un carter et entraînées en rotation,
le mécanisme de coupe pouvant être relevé dans une position basculée par rapport au cadre, suivant un axe de basculement transversal à la direction de déplacement,
le côté avant du mécanisme de coupe étant davantage distant par rapport à la surface du sol que le côté arrière du mécanisme de coupe,
le mécanisme de coupe (7) pouvant être fixé en position relevée à l'aide d'un dispositif (16, 17) installé entre le mécanisme de coupe (7) et le cadre (4),
le dispositif (16, 17) pour relever le mécanisme de coupe (7) étant réalisé sous la forme d'un dispositif de levage et le mécanisme de coupe (7) se relevant de façon que la distance verticale A de la face inférieure du côté avant (7') du mécanisme de coupe par rapport à la face inférieure du côté arrière (7") du mécanisme de coupe (7) en position relevée, corresponde au moins à un tiers de la longueur L du mécanisme de coupe (7) s'étendant dans la direction de déplacement (18) et cela de façon que la face inférieure du mécanisme de coupe (7) soit accessible pour le nettoyage,
**caractérisée en ce que**
l'entraînement du mécanisme de coupe (7) est équipé d'une installation de coupure qui arrête l'entraînement du mécanisme de coupe (7) lorsque celui-ci est mis en position relevée.

2. Tondeuse automotrice selon la revendication 1,
**caractérisée en ce que**
le dispositif de levage est un treuil à câble (17).

3. Tondeuse automotrice selon la revendication 2,
**caractérisée en ce que**
le treuil à câble (17) est autobloquant.

4. Tondeuse automotrice selon la revendication 1,
**caractérisée en ce que**
le dispositif de levage est un actionneur motorisé tel que par exemple un vérin hydraulique, un moteur électrique à broche.

5. Tondeuse automotrice selon l'une ou plusieurs des revendications précédentes,
**caractérisée par**
un espace libre suffisant entre le côté supérieur du mécanisme de coupe (7) et le cadre (4) pour relever le mécanisme de coupe (7).
